# DEMANDE DE BREVET EUROPEEN

(11) **EP 1 908 617 A1**
(43) Date de publication de la demande: **09.04.2008**
(21) Numéro de dépôt: 07115959.4
(22) Date de dépôt: 07.09.2007
(51) Int. Cl.: B60K 5/12

(54) **Dispositif de refroidissement d'une pièce de maintien d'un moteur d'un véhicule automobile**

(30) Priorité: 07.09.2006 FR 0653615
(71) Demandeur: Peugeot Citroën Automobiles Société Anonyme, 78140 Velizy Villacoublay (FR)
(72) Inventeur: Ekue, Fabrice, 75020, PARIS (FR); Rougier, Cédric, 78740, VAUX SUR SEINE (FR); Henriot, Philippe, 75017, PARIS (FR)

(57) **Abrégé**

L'invention concerne un dispositif de refroidissement d'une pièce de maintien (1) d'un moteur (3) d'un véhicule automobile.

Selon l'invention, le dispositif comprend un organe (10) aspirant l'air extérieur au véhicule et un circuit d'acheminement de l'air aspiré depuis l'organe (10) jusqu'à la pièce de maintien, cet organe d'aspiration étant constitué par une poulie (12) située au niveau d'une façade de distribution (4) du moteur (3) en étant liée en rotation à un arbre à cames du moteur (3)

L'invention s'applique au domaine des véhicules automobiles.

## Description

L'invention concerne un dispositif de refroidissement d'une pièce de maintien d'un moteur d'un véhicule automobile.

Dans un véhicule automobile, la chaleur générée par le moteur au cours de son fonctionnement se propage à l'ensemble des éléments situés à proximité du moteur, et plus particulièrement aux pièces de maintien de ce moteur.

De ce fait, une pièce de maintien telle qu'une biellette anti-couple, est soumise à des températures élevées, préjudiciables à la tenue dans le temps des caractéristiques du matériau la constituant.

Le but de l'invention est de remédier à cet inconvénient.

A cet effet, l'invention concerne un dispositif de refroidissement d'une pièce de maintien d'un moteur d'un véhicule automobile.

Selon l'invention, le dispositif comprend un organe aspirant l'air extérieur au véhicule et un circuit d'acheminement de l'air aspiré depuis l'organe jusqu'à la pièce de maintien.

Selon une autre caractéristique, l'organe d'aspiration est constitué par une poulie située au niveau d'une façade de distribution du moteur, en étant liée en rotation avec un arbre à cames du moteur.

Selon encore une autre caractéristique, le circuit d'acheminement comprend des canules formées au sein du carter et pourvue chacune d'une extrémité débouchant sous la poulie à ailettes, l'extrémité opposée débouchant sur une deuxième façade du carter proche de la pièce de maintien.

De préférence, le circuit d'acheminement comprend en outre un tube d'acheminement de l'air véhiculé par les canules, comprenant une extrémité située au niveau de la deuxième façade du carter, à l'endroit où débouchent les canules et une extrémité libre située à proximité de la pièce de maintien.

Selon une autre caractéristique, le circuit d'acheminement comprend des parois de canalisation entourant latéralement la poulie et faisant converger l'air aspiré par cette poulie en un point où cet air est véhiculé vers la pièce à refroidir.

Avantageusement, le circuit comprend un conduit d'acheminement de l'air canalisé par les parois vers la pièce à refroidir, une extrémité d'entrée de ce conduit étant située au niveau du point de convergence de l'air aspiré.

De préférence, les parois de canalisation définissent un espace latéral de passage de l'extrémité du conduit d'acheminement de l'air.

Avantageusement, le dispositif selon l'invention comprend un conduit d'amené d'air extérieur vers la poulie à ailette.

Il est possible que l'extrémité du conduit opposée à la poulie soit fixée au niveau d'un passage de roue du véhicule situé en regard de la façade correspondante du carter de fixation de la poulie.

Selon une autre caractéristique, le conduit est pourvu d'un filtre destiné à piéger toute sorte de particules, comme, par exemple, des poussières, de l'eau ou des gravillons.

Selon encore une autre caractéristique, la pièce de maintien est une biellette anti-couple.

L'invention sera maintenant décrite plus en détail, et en référence aux dessins annexés qui en illustrent une forme de réalisation à titre d'exemple non limitatif, parmi lesquels :
- la figure 1 est une vue en perspective d'un moteur d'un véhicule automobile et de son environnement au sein du véhicule ;
- la figure 2 est une vue de côté du moteur de la figure 1 et de son environnement, selon la flèche repérée par II sur la figure 1 ;
- la figure 3 est une vue partielle en perspective d'un conduit d'amenée d'air du dispositif selon l'invention monté sur le carter de distribution du moteur de la figure 2 ;
- la figure 4 est une vue partielle de côté du dispositif selon un premier mode de réalisation, selon la flèche repérée par IV sur cette figure 3, représentant le conduit d'amenée d'air et une poulie à ailette du dispositif selon l'invention ;
- la figure 5 est une vue partielle en perspective agrandie du conduit d'amenée d'air et de la poulie à ailette du dispositif de la figure 4.
- la figure 6 est une vue partielle analogue à la figure 4 pour un second mode de réalisation du dispositif de l'invention ;
- la figure 7 est une vue avec arrachement du dispositif de la figure 6 ;
- la figure 8 est une vue schématique en perspective représentant le conduit d'amenée d'air vers la poulie et le conduit d'acheminement de cet air vers la pièce à refroidir, pour les deux modes de réalisation ci-dessus.

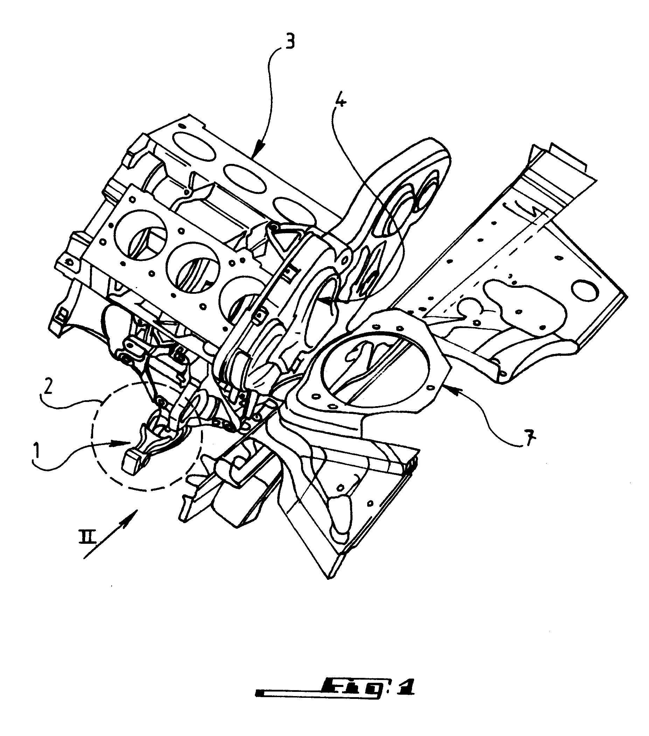

Comme visible sur la figure 1, dans un véhicule automobile, une biellette anti-couple 1 est située à l'extérieur du moteur 3 dans une zone inférieure 2 de ce dernier.

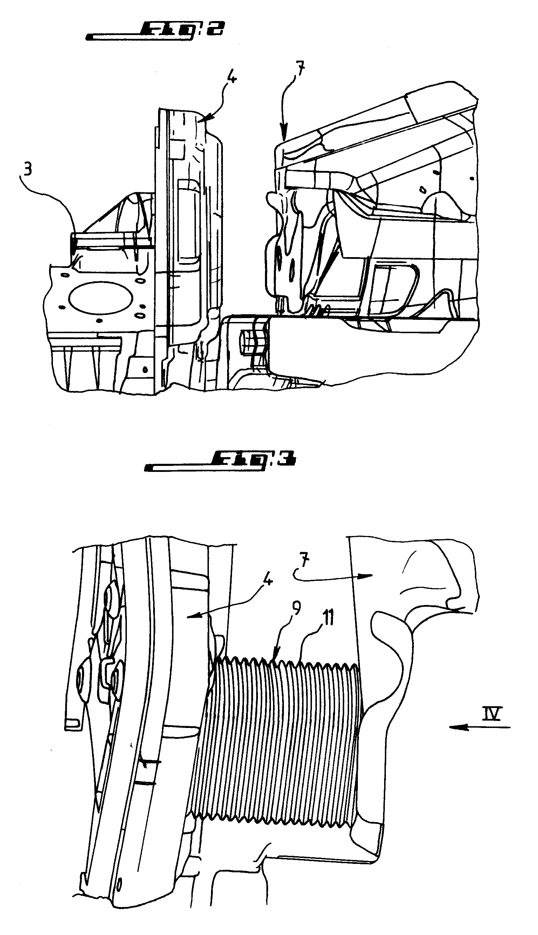

Plus précisément, la biellette 1 est disposée au dessus du carter inférieur (non représenté) du moteur, à proximité d'une façade latérale 4 du carter de distribution du moteur 3, elle-même située en regard d'une structure de passage de roue 7 du véhicule, comme mieux visible sur la figure 2.

La biellette 1 fait partie des moyens de suspension du moteur 3 et a en outre comme fonction d'empêcher la propagation des vibrations générées par ce moteur, afin d'améliorer le confort des passagers du véhicule. Elle est constituée à cet effet d'une articulation en élastomère présentant des propriétés d'amortissement des vibrations.

Etant donné sa proximité par rapport au moteur 3, la biellette 1 est située dans une zone 2 à température élevée pouvant détériorer à long terme l'articulation en élastomère la constituant ainsi que les organes permettant sa fixation au moteur.

Selon l'invention, un dispositif de refroidissement 8 assure l'aspiration et l'acheminement d'air frais, extérieur au véhicule jusqu'à la zone inférieure 2 du moteur 3 dans laquelle est placée la biellette 1.

Plus précisément, le dispositif selon l'invention 8 récupère de l'air par le passage de roue 7 du véhicule au moyen d'un conduit d'amenée d'air 9 et d'organes d'aspiration 10 et véhicule cet air grâce à un circuit d'acheminement 11 de l'air aspiré jusqu'à la biellette 1.

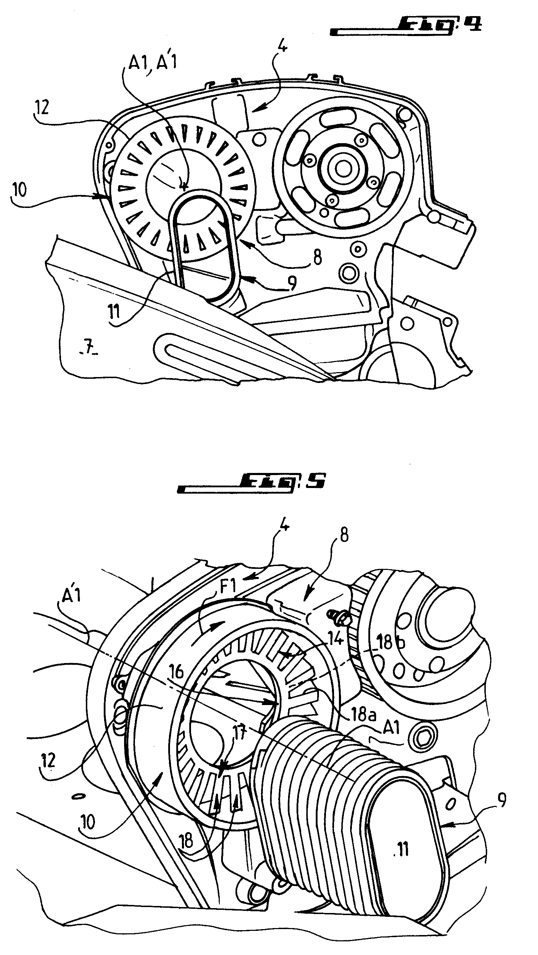

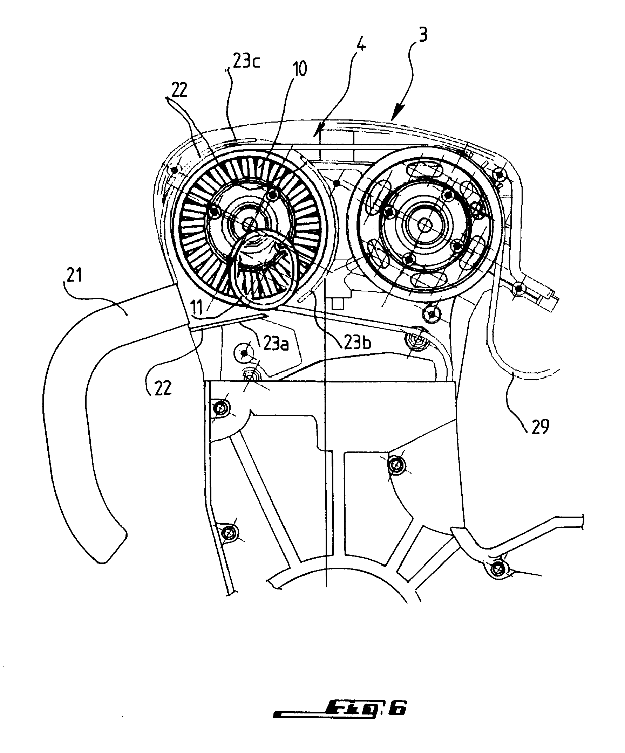

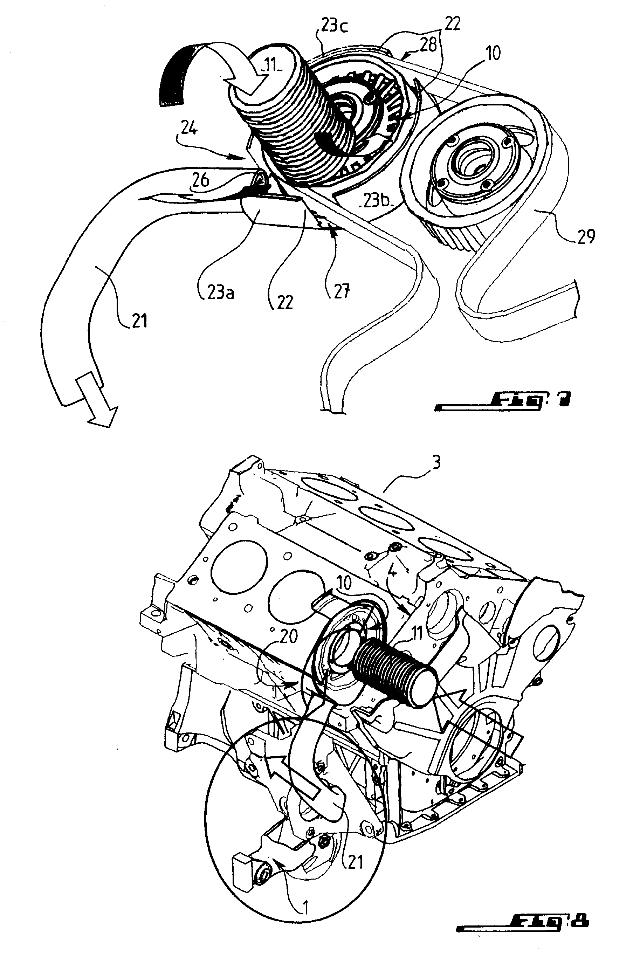

Dans l'exemple représenté sur les figures 4 et 5, le conduit d'amenée d'air 9 est interposé entre le passage de roue 7 et la façade latérale 4 du carter et est rigidement solidarisé au passage de roue 7.

Avantageusement, ce conduit d'amenée d'air 9 est constitué par un soufflet 11, en matière plastique, de préférence pourvu d'un filtre à fines particules telles que des poussières (non représenté) et/ou constitué d'un matériau hydrophile, permettant la capture des gouttelettes d'eau et leur ruissellement le long de la face du filtre opposée au carter.

Ce soufflet filtré 11 comprend selon le mode de réalisation représenté sur la figure 3, une extrémité solidarisée au passage de roue, l'extrémité opposée étant fixée à la façade correspondante 4 du carter de distribution.

Selon un mode de réalisation non représenté, l'extrémité du soufflet 11 opposée au passage de roue 7 n'est pas directement fixée à la façade 4 du carter mais débouche dans un conduit de type boa (non représenté) dont une extrémité est fixée au carter.

Selon une variante de réalisation des organes d'aspiration 9 du dispositif 8, visible sur la figure 4, ces organes 9 sont constitués par des poulies à ailettes intégrées 12 remplaçant les poulies d'arbre à cames existantes (non représentées), montées rotatives autour d'un axe horizontal A1, A'1 normal à la façade 4 du carter et fixées sur cette façade 4 de façon à être située en vis-à-vis du passage de roue adjacent 7.

Les ailettes 13 d'une telle poulie 12 sont orientées de façon à diriger l'air issu du passage de roue 7 en direction de la façade du carter 4 lors de la rotation de la poulie 12 autour de son axe A1, A'1.

Plus précisément, comme mieux représenté sur la figure 5, une poulie à ailettes 12 selon l'invention, est munie d'un disque 14 pourvu d'une découpe centrale 16 définissant une couronne circulaire plate 17 au sein de laquelle sont formées des ailettes radiales 18 constituées par des pans inclinés définissant un bord supérieur 18a et un bord inférieur 18b, le bord supérieur 18a d'une ailette 18 étant le premier à venir être situé sous le soufflet 11, lors de la rotation de la poulie 12 autour de son axe A1, A'1 dans le sens repéré par la flèche F1.

L'air aspiré par les poulies 12 est véhiculé par le circuit d'acheminement jusqu'à la biellette anti-couple 1.

Selon un premier mode de réalisation du circuit d'acheminement, ce circuit comprend des canules (non représentées) incorporées dans le carter de distribution et dont une extrémité débouche sous la poulie à l'ailette 12, l'extrémité opposée débouchant sur le carter inférieur, et un conduit de type boa (non représenté) interposé entre la sortie des canules sur la façade inférieure 20 du carter et la biellette à refroidir 1.

Afin de minimiser les pertes d'air aspiré lors de son cheminement au sein du carter, l'étanchéité du carter sera améliorée, par exemple par la pose d'un enduit d'étanchéité sur les façades inférieure et latérale du carter.

Selon un second mode de réalisation du circuit d'acheminement de l'air vers la biellette 1, tel que représenté sur les figures 6 et 7, l'air aspiré par les poulies est dirigé vers un tube de type boa 21 débouchant sur la biellette 1, par un ensemble de parois 22, normales à la façade 4 du carter de distribution sur laquelle les poulies 10 sont fixées.

Plus précisément, dans ce mode de réalisation, la façade 4 du carter est ménagée pour canaliser l'air aspiré par les poulies 10 vers l'entrée du tube boa 21.

L'ensemble des parois 22 forme un carter supplémentaire entourant la poulie 10 et qui est intégré dans le carter de distribution du moteur 3. Comme mieux visible sur la figure 7, l'ensemble 22 de parois de canalisation de l'air est constitué par trois parois 23a, 23b, 23c, normales à la façade 4 du carter de distribution et s'étendant autour de la poulie 10 dont elles canalisent l'air.

Ces trois parois 23a, 23b, 23c sont séparées l'une de l'autre successivement par un espace de passage 24 de l'orifice d'entrée 26 du tube de type boa 21 et par deux espaces de passage 27, 28 de la courroie 29 du moteur entraînant en rotation la poulie à ailette 10.

L'orientation et la disposition de ces parois 23a, 23b, 23c permettent une canalisation de l'air aspiré par la poulie 10 en un point coïncidant avec l'orifice d'entrée 26 du tube de type boa 21.

Les espaces 24, 27, 28 définis par les parois 23a, 23b, 23c sont suffisamment larges pour autoriser la présence de l'extrémité 26 du tube boa 21 et pour permettre la translation de la courroie 29 mais suffisamment étroits pour éviter une trop grande déperdition de l'air aspiré par les poulies 10.

Comme visible sur la figure 8, le boa 21 transmet directement à la biellette 1 l'air aspiré par la poulie 10 et canalisé par l'ensemble 22 de parois 23a, 23b, 23c.

L'invention telle que décrite ci-dessus, permet d'augmenter la durée de vie de la biellette anti-couple et de préserver ses propriétés d'amortissement des vibrations du moteur.

## Revendications

1. Dispositif de refroidissement d'une pièce de maintien d'un moteur (3) d'un véhicule automobile, comprenant un organe (10) aspirant l'air extérieur au véhicule et un circuit d'acheminement de l'air aspiré depuis l'organe jusqu'à la pièce de maintien (1), **caractérisé en ce que** l'organe d'aspiration (10) est constitué par une poulie (12) située au niveau d'une façade de distribution (4) du moteur (3) en étant liée en rotation à un arbre à cames du moteur (3).

2. Dispositif selon la revendication 1, **caractérisé en ce que** le circuit d'acheminement comprend des canules formées au sein du carter et pourvue chacune d'une extrémité débouchant sous la poulie à ailettes, l'extrémité opposée débouchant sur une deuxième façade du carter proche de la pièce de maintien (1).

3. Dispositif selon la revendication 2, **caractérisé en ce que** le circuit d'acheminement comprend en outre un conduit d'acheminement de l'air véhiculé par les canules, comprenant une extrémité située au niveau de la deuxième façade du carter, à l'endroit où débouchent les canules et une extrémité libre située à proximité de la pièce de maintien (1) .

4. Dispositif selon la revendication 3, **caractérisé en ce que** le circuit d'acheminement comprend des parois de canalisation (23a, 23b, 23c) entourant latéralement la poulie (10) et faisant converger l'air aspiré par la poulie (10) en un point (24) à partir duquel l'air est véhiculé vers la pièce à refroidir (1).

5. Dispositif selon la revendication 4, **caractérisé en ce que** le circuit comprend un conduit d'acheminement (21) de l'air canalisé par les parois (23a, 23b, 23c) vers la pièce à refroidir, une extrémité (26) de ce conduit (21) étant située au niveau du point (24) de convergence de l'air aspiré.

6. Dispositif selon la revendication 5, **caractérisé en ce que** les parois de canalisation (23a, 23b, 23c) définissent un espace latéral (24) de passage de l'extrémité (26) du conduit d'acheminement de l'air (21).

7. Dispositif selon l'une des revendications 1 à 6, **caractérisé en ce qu'**il comprend un conduit (9) d'amenée d'air extérieur vers la poulie à ailette (12).

8. Dispositif selon la revendication 7, **caractérisé en ce que** le conduit (11) est pourvu d'un filtre.

9. Dispositif selon l'une des revendications précédentes, **caractérisé en ce que** la pièce de maintien (1) est une biellette anti-couple.
